(19)

Europäisches Patentamt

European Patent Office

Office européen des brevets

(11)     **EP 4 386 470 A1**

(12)     **EUROPEAN PATENT APPLICATION**

(43) Date of publication:
**19.06.2024   Bulletin 2024/25**

(21) Application number: **22306856.0**

(22) Date of filing: **12.12.2022**

(51) International Patent Classification (IPC):
***G02C 7/02*** *(2006.01)*          ***G02C 7/06*** *(2006.01)*
***G02C 7/10*** *(2006.01)*

(52) Cooperative Patent Classification (CPC):
**G02C 7/104; G02C 7/027; G02C 7/061;
G02C 7/068; G02C 7/105;** G02C 7/101

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Essilor International
94220 Charenton-Le-Pont (FR)**

(72) Inventors:
• **DUBAIL, Marie
  94220 CHARENTON-LE-PONT (FR)**
• **SCHERLEN, Anne-Catherine
  94220 CHARENTON-LE-PONT (FR)**
• **FRICKER, Sébastien
  94220 CHARENTON-LE-PONT (FR)**

(74) Representative: **Cabinet Novitech
188 Grande rue Charles de Gaulle
94130 Nogent-sur-Marne (FR)**

(54)     **OPTICAL DESIGN AND SPECTRAL TRANSMISSION OPTIMIZATION**

(57)     The disclosure relates to a method for determining an ophthalmic lens adapted to an eye of a wearer, comprising a first and a second portion having a first and second spectral transmissions configured to provide an optical power shift while reducing optical aberration induced by unwanted astigmatism due to ophthalmic front and rear faces curvature.

Fig. 18c

## Description

## TECHNICAL FIELD

The disclosure relates to ophthalmic lens design. More particularly, the disclosure relates to the design of an ophthalmic lens involving its geometry and its spectral transmission.

## BACKGROUND

Some of the existing ophthalmic lenses may not provide to the wearer an optimal vision in all gaze directions. Due to limitations in optics, lenses may have aberrations that limit the clarity of vision, monocularly or binocularly.

For example, progressive addition lenses may have unwanted astigmatism in the periphery. The larger the addition, the greater the unwanted astigmatism is present in the zone dedicated to intermediate vision.

It is therefore desirable to propose ophthalmic lenses with reduced aberrations.

One object of the present disclosure is to provide such ophthalmic lenses with reduced aberrations. Another object of the present disclosure is to control the optical power over the lens.

## SUMMARY OF THE DISCLOSURE

To this end, the disclosure relates to a method for determining an ophthalmic lens adapted to an eye of a wearer, wherein the method comprises the following steps:

- obtaining wearing data relative to wearing conditions,
- obtaining a first and a second target optical powers, perceived by the wearer, respectively for a first and second gazing directions defined in the obtained wearing conditions,
  the first and second target optical powers being different one from the other and the first and second gazing directions being different one from the other,
- obtaining data representative of the ophthalmic lens comprising:

  ◦ a material of the ophthalmic lens having a refractive index and a spectral transmission, ◦ a front face having a front shape,
  ◦ a rear face having a rear shape,
  ◦ a relative position of the front and rear faces,
  ◦ a first portion of the ophthalmic lens through which passes the first gazing direction in the obtained wearing conditions, the first portion having a first spectral transmission, and
  ◦ a second portion of the ophthalmic lens through which passes the second gazing direction in the obtained wearing conditions, the second portion having a second spectral transmission,

- obtaining an eye function providing a transmitted optical power variation based on a spectral content of the light entering the eye of the wearer,
- determining an optical function of the ophthalmic lens based on the data representative of the ophthalmic lens, the first and second spectral transmission, providing to the wearer, in wearing conditions and considering said eye function, such that an estimated first optical power in the first gazing direction equals the first target optical power and an estimated second optical power in the second gazing direction equals the second target optical power, and

wherein at least one of the first spectral transmission, over the first portion of the ophthalmic lens, and/or the second spectral transmission, over the second portion of the ophthalmic lens, differs from the spectral transmission over another portion of the ophthalmic lens.

Advantageously, adding specific spectral transmission area over the ophthalmic lens can induce ametropic shift and thus can be combined with optical design to reduce optical aberration and improve vision quality.

Advantageously, providing a dioptric optical power thanks to a specific spectral transmission enables to provide an optical power without increasing unwanted astigmatism caused by the curvature of the front and the rear faces of the ophthalmic lens.

By providing a well-chosen spectral transmission to an area of the ophthalmic lens, the ophthalmic lens designer has additional degrees of freedom to provide an ophthalmic lens adapted to a wearer. By varying the spectral transmission over particular portion, it is possible to provide a positive or a negative optical power defocus. In such manner, wearers having different prescriptions can be provided with ophthalmic lenses having the same geometry, for example same front shape and rear shape. The difference in the ophthalmic power provided to the wearer could be dependent of the optical power defocus induced by the spectral transmission over a portion of the ophthalmic lens.

The first and/or the second spectral transmissions can be caused by a tint of the first and/or second portions of the ophthalmic lens. Due to Longitudinal chromatic aberration (LCA), adding a specific spectral transmission, via a tint over a portion of the ophthalmic lens, in particular very colorful lenses with unbalanced spectral transmission, can induce an ametropic shift. By adding a specific spectral transmission to the ophthalmic lens, one can modulate the optical power provided to the eye of the wearer, without impacting the curvatures of the front and rear faces and therefore the astigmatism of the ophthalmic lens.

According to further embodiments of the method which can be considered alone or in combination:

- the first spectral transmission, over the first portion of the ophthalmic lens, and the second spectral transmission, over the second portion of the ophthalmic lens, differs from the spectral transmission over another portion of the ophthalmic lens; and/or

- providing a first filter superimposed over the first portion of the ophthalmic lens, the first spectral transmission is the resulting spectral transmission of the light passing through the first portion of the ophthalmic lens; and/or
- providing a second filter superimposed over the second portion of the ophthalmic lens, the second spectral transmission is the resulting spectral transmission of the light passing through the second portion of the ophthalmic lens; and/or
- the first and second spectral transmission provide respectively a first and a second addition of perceived optical power to the eye of the wearer, the absolute value of the difference between the first addition and the second addition is strictly greater than zero, for example greater than 0.1 D, preferably greater than 0.25 D; and/or
- the whole ophthalmic lens, between the front and the rear faces, is made of the same material having a constant refractive index; and/or
- the ophthalmic lens comprises between the first portion and the second portion, a continuous gradient of spectral transmissions configured to provide a continuous variation of the optical power perceived by the wearer; and/or
- the ophthalmic lens is a progressive addition lens, and the gradient of spectral transmissions extends over a corridor portion of the progressive addition lens, the corridor portion extends alongside the meridian between the first portion dedicated for far vision, in wearing condition, and the second portion dedicated for near vision, in wearing conditions, and the corridor portion extends over a progression portion of the progressive addition lens; and/or
- the method further comprises:

  ∘ obtaining the wearer's prescribed astigmatism,
  ∘ determining the astigmatism provided by the ophthalmic lens,
  ∘ optimizing the ophthalmic lens so as to reduce the difference between the measured astigmatism and the prescribed astigmatism based on the optimization of any of the following criterions:

    ▪ front shape of the front face,
    ▪ rear shape of the rear face,
    ▪ position of the front face with respect to the rear face,
    ▪ refractive index of the material of the ophthalmic lens,
    ▪ spectral transmission relative to the material of the ophthalmic lens,
    ▪ the first portion of the ophthalmic lens having the first spectral transmission, and

    ▪ the second portion of the ophthalmic lens having the second spectral transmission; and/or

- a selection of the ophthalmic lens is made among a predefined set of ophthalmic lenses providing optical parameters being the closest to optical parameters of a target, for example the target is an optical power map and/or an astigmatism map; and/or
- the first and/or second filter is activated based on a driving signal for example the application of a voltage.

Another object of the disclosure is an ophthalmic lens adapted to an eye of a wearer, the ophthalmic lens provides a first optical power in a first direction and a second optical power in a second gazing direction,

the first and second gazing directions being different, and
the first and second optical powers being different, the ophthalmic lens has:

- a front face, configured to face an object in the real scene when the ophthalmic lens is worn, having a front shape,
- a rear face, configured to face the eye of a wearer when the ophthalmic lens is worn, the rear face having a rear shape,
- a relative position of the front and rear faces,
- spectral transmission relative to the material of the ophthalmic lens, and
- a refractive index of the material of the ophthalmic lens,
- a first portion of the ophthalmic lens through which gaze the wearer, when the wearer wears the ophthalmic lens in wearing conditions and gazes through the first gazing direction, the first portion has a first spectral transmission, and
- a second portion of the ophthalmic lens through which gaze the wearer, when the wearer wears the ophthalmic lens in the wearing conditions and gazes through the second gazing direction, the second portion has a second spectral transmission,

wherein at least one of the first spectral transmission, over the first portion of the ophthalmic lens, and/or the second spectral transmission, over the second portion of the ophthalmic lens, differs from the spectral transmission over another portion of the ophthalmic lens.

According to further embodiments of the ophthalmic lens which can be considered alone or in combination:

- the first spectral transmission, over the first portion of the ophthalmic lens, and the second spectral transmission, over the second portion of the ophthalmic lens, differs from the spectral transmission over another portion of the ophthalmic lens; and/or

- a first filter superimposed over the first portion of the ophthalmic lens, the first spectral transmission is the resulting spectral transmission of the light passing through the first portion of the ophthalmic lens; and/or

- a second filter superimposed over the second portion of the ophthalmic lens, the second spectral transmission is the resulting spectral transmission of the light passing through the second portion of the ophthalmic lens; and/or

- the first optical power corresponds to a prescribed far vision power; and/or

- the second optical power corresponds to a prescribed near vision power; and/or

- the ophthalmic lens is configured to provide to the eye of a wearer, at least in the first and second gazing directions an optical power which is different from the optical power measured by the ophthalmic lensmeter in said first and second gazing directions; and/or

- the first and second spectral transmissions are configured to provide respectively a first and a second additions of perceived optical power to the eye of the wearer, and the absolute value of the difference between the first addition and the second addition is strictly greater than zero, for example greater than 0.1 D, preferably greater than 0.25 D; and/or

- the whole ophthalmic lens is made of the same material, and wherein the refractive is constant over the whole ophthalmic lens; and/or

- the ophthalmic lens is a progressive ophthalmic lens and comprises between the first portion and the second portion, a continuous gradient of spectral transmissions; and/or

- the gradient of spectral transmissions extends over a corridor portion of the progressive ophthalmic lens, and/or

- the corridor portion extends between the first portion dedicated for far vision, in wearing condition, and the second portion dedicated for near vision, in wearing conditions, and the corridor portion extends over a progression portion of the progressive ophthalmic lens; and/or

- the first and/or second spectral transmission is configured to be activated based on a driving signal for example the application of a voltage; and/or

- the first and/or second spectral transmission is configured to be conditioned based on the application of given voltage to the ophthalmic lens; and/or

- the ophthalmic lens is configured to be mounted in a spectacle frame; and/or

- the ophthalmic lens comprises a first plurality of lenslets that have a first spectral transmission; and/or

- the ophthalmic lens comprises a second plurality of lenslets that have a second spectral transmission; and/or

- the ophthalmic lens is a contact lens; and/or

- the ophthalmic lens has a spherotoric front and rear diopters.

Another object of the disclosure is a computer program product comprising one or more stored sequences of instructions which, when executed by a processing unit, are able to perform the method according to the disclosure.

The disclosure further relates to a computer program product comprising one or more stored sequences of instructions that are accessible to a processor and which, when executed by the processor, causes the processor to carry out at least the steps of the method according to the disclosure.

The disclosure also relates to a computer-readable storage medium having a program recorded thereon; where the program makes the computer execute at least the steps of the method of the disclosure.

The disclosure further relates to a device comprising a processor adapted to store one or more sequences of instructions and to carry out at least the steps of the method according to the disclosure.

**BRIEF DESCRIPTION OF THE DRAWINGS**

Non limiting embodiments of the disclosure will now be described, by way of example only, and with reference to the following drawings in which:

- Figures 1 and 2 show, diagrammatically, optical systems of eye and lens and ray tracing from the center of rotation of the eye;

- Figure 3 shows the field vision zones of an ophthalmic progressive addition lens;

- Figure 4 is a flowchart of the method according to the disclosure;

- Figures 5 is diagram of spectral light transmission based on the tint of an ophthalmic lens;

- Figure 6 shows an ophthalmic lens according to the disclosure;

- Figures 7a to 7c show ophthalmic lenses according to different embodiments of the disclosure;

- Figures 8a and 8b show the optical power and the astigmatism cartographies of a conventional ophthalmic lens having a 2.00 D addition;

- Figures 9a and 9b show the optical power and the astigmatism cartographies of a conventional ophthalmic lens having a 2.25 D addition;

- Figures 10a and 10b show the optical power and the astigmatism cartographies of an ophthalmic lens having a 2.25 D addition according to the disclosure;

- Figures 11a and 11b show the optical power and the astigmatism cartographies of a conventional ophthalmic lens for a right eye having an optical power of 1.00 D and a 2.00 D addition;

- Figures 12a and 12b show the optical power and the astigmatism cartographies of a conventional ophthalmic lens for a left eye having an optical power of -1.00 D and a 2.00 D addition;

- Figures 13a and 13b show the optical power and the astigmatism cartographies of an ophthalmic lens according to the disclosure for a right eye having an optical power of 1.00 D induced by a tint of a portion of the ophthalmic lens and a 2.00 D addition;
- Figures 14a and 14b show the optical power and the astigmatism cartographies of an ophthalmic lens according to the disclosure for a left eye having an optical power of - 1.00 D induced by a tint of a portion of the ophthalmic lens and a 2.00 D addition;
- Figures 15a and 15b show the optical power and the astigmatism cartographies of a conventional ophthalmic lens having an optical power of 1.00 D and a 2.00 D addition;
- Figures 16a and 16b show the optical power and the astigmatism cartographies of an ophthalmic lens according to the disclosure having an optical power of 1.00 D provided by a tint and a 2.00 D addition;
- Figure 17 is an illustration of the rebound involved by the shape on a conventional ophthalmic lens and an ophthalmic lens according to the disclosure;
- Figure 18a shows the progression of the dioptric optical power on a conventional progressive addition lens;
- Figure 18b shows the progression of the dioptric optical power on a conventional progressive addition lens having a stabilized zone dedicated to intermediate distance vision; and
- Figure 18c shows the progression of the dioptric optical power on a progressive addition lens according to the disclosure;
- Figure 19 is an illustration of a lens comprising lenslets.

## DEFINITIONS

The following definitions are provided so as to define the wordings used within the frame of the present disclosure.

The wordings "wearer's prescription", also called "prescription data", are known in the art. Prescription data refers to one or more data obtained for the wearer and indicating for at least an eye, preferably for each eye, a prescribed sphere SPHp, and/or a prescribed astigmatism value CYLp and a prescribed axis AXISp suitable for correcting the ametropia of each eye for the wearer and a prescribed addition Add suitable for correcting the presbyopia of each of his eyes. The prescribed optical data, such as the prescribed optical power, the prescribed addition and/or the prescribed astigmatism, is transmitted by the ECP when he/she orders the ophthalmic lens to an ophthalmic lens manufacturer.

The prescribed optical power may comprise the prescribed far vision power corresponding to the optical power provided to the wearer to correct the visual impairment when the wearer is gazing at far distance.

The prescribed optical power may comprise the prescribed near vision power corresponding to the optical power provided to the wearer to correct the visual impairment when the wearer is gazing at near distance.

The ophthalmic lens manufacturer prescribed addition usually inscribes information relative to the prescribed addition on the paper packaging of the delivered lens. The prescribed addition may be also determined from engravings located on the ophthalmic lens and still visible after the ophthalmic lens is edged and when mounted in said spectacle frame chosen by the wearer.

"Progressive ophthalmic addition lenses" are known in the art. According to the disclosure, the ophthalmic lens may be an unedged ophthalmic lens or a spectacle lens edged to be mounted in a spectacle frame. The ophthalmic lens may also be suitable for sunglasses. All ophthalmic lenses of the disclosure may be paired so as to form a pair of lenses (left eye LE, right eye RE).

The wording "optical design" is a widely used wording known from the man skilled in the art in ophthalmic domain to designate the set of parameters allowing to defining an optical function of an ophthalmic lens. Each ophthalmic lens designer has its own designs, particularly for progressive ophthalmic lenses. As for an example, a progressive ophthalmic lens "design" results of an optimization of a progressive surface so as to restore a presbyope's ability to see clearly at all distances but also to optimally respect all physiological visual functions such as foveal vision, extra-foveal vision, binocular vision, dynamic vision and to minimize unwanted astigmatisms. For example, a progressive lens design comprises:

- a power profile along the main gaze directions (meridian line) used by the ophthalmic lens wearer during day life activities,
- distributions of powers (mean power, astigmatism,...) on the sides of the ophthalmic lens, that is to say away from the main gaze direction.

These optical characteristics are part of the "designs" defined and calculated by ophthalmic lens designers and that are provided with the progressive lenses.

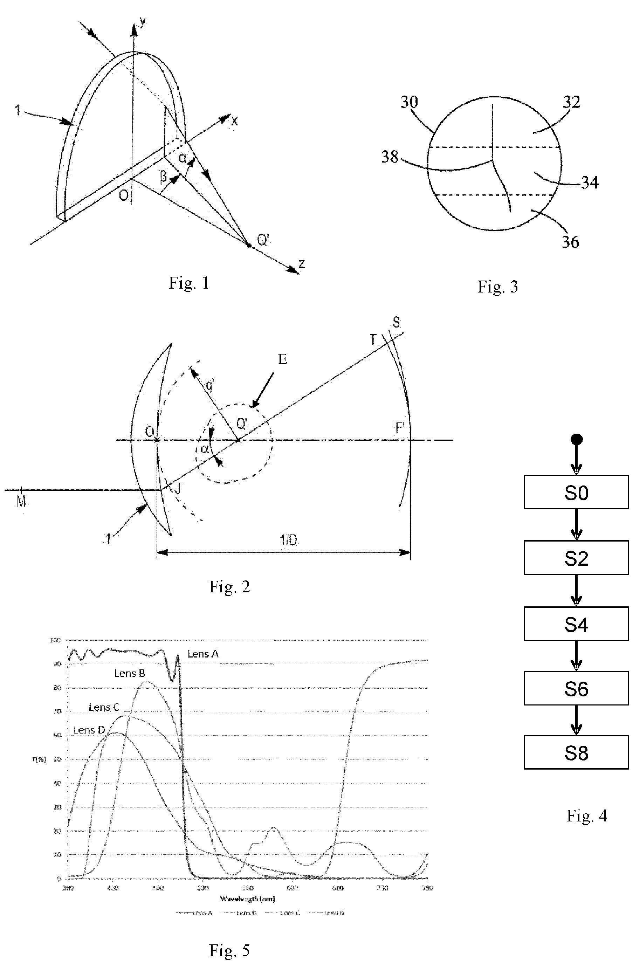

A "gaze direction" is identified by a couple of angle values $(\alpha,\beta)$, wherein said angles values are measured with regard to reference axes centered on the center lens O. More precisely, figure 1 represents a perspective view of an ophthalmic lens 1 and illustrating parameters $\alpha$ and $\beta$ used defining a gaze direction. The angle alpha shown in figure 1 has a negative value.

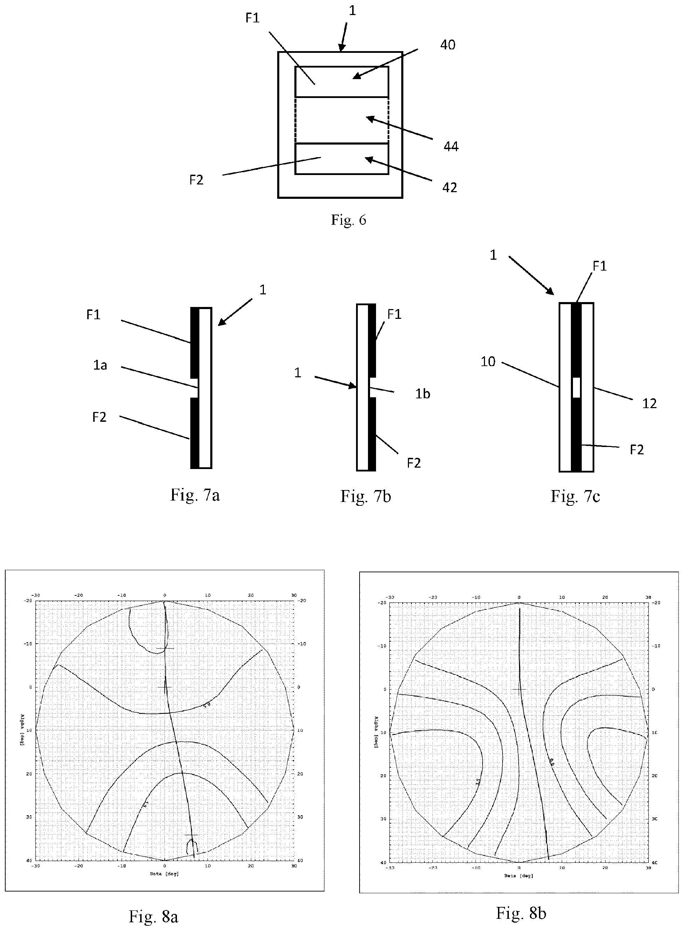

In other embodiments, as illustrated on figures 8a to 16b, the reference axes are centered on the lens fitting point.

Figure 2 is a view in the vertical plane parallel to the antero-posterior axis of the wearer's head and passing through the center of rotation of the eye in the case when the parameter $\beta$ is equal to 0. The center of rotation of the eye is labeled Q'. The axis Q'-F', shown on Figure 2 in a dot-dash line, is the horizontal axis passing through the center of rotation of the eye and extending in front of the wearer - that is the axis Q'-F' corresponding to the primary gaze direction. The ophthalmic lens is placed and centered in front of the eye such that the axis Q'-F' cuts the front face of the ophthalmic lens on a point called the fitting cross, which is, in general, present on lenses to enable the positioning of lenses in a frame by an optician. The point of intersection of the rear face of the ophthalmic lens and the axis Q'-F' is the point, O. A vertex sphere, which center is the center of rotation of the eye, Q', and has a radius q' = O-Q', intercepts the rear face of the ophthalmic lens in a point of the horizontal axis. A value of radius q' of 25.5 mm corresponds to a usual value and provides satisfying results when wearing the ophthalmic lenses. Other value of radius q' may be chosen. A given gaze direction, represented by a solid line on figure 1, corresponds to a position of the eye in rotation around Q' and to a point J (see figure 2) of the vertex sphere.

The angle β is the angle formed between the axis Q'-F' and the projection of the straight line Q'-J on the horizontal plane comprising the axis Q'-F'; this angle appears on the scheme on Figure 1.

The angle α is the angle formed between the axis Q'-J and the projection of the straight line Q'-J on the horizontal plane comprising the axis Q'-F'; this angle appears on the scheme on Figures 1 and 2.

A given gaze direction thus corresponds to a point J of the vertex sphere or to a couple (α,β). The more the value of the lowering gaze angle α is positive, the more the gaze is lowering and the more the value is negative, the more the gaze is rising. In a given gaze direction, the image of a point M in the object space, located at a given object distance, is formed between two points S and T corresponding to minimum and maximum distances JS and JT, which would be the sagittal and tangential local focal lengths. The image of a point in the object space at infinity is formed, at the point F'. The distance D corresponds to the rear frontal plane of the ophthalmic lens.

For each gaze direction (α,β), a mean refractive power PPO(α,β) a module of astigmatism AST(α,β) and an axis AXE(α,β) of this astigmatism, and a module of resulting (also called residual or unwanted) astigmatism ASK(α,β) are defined.

"Astigmatism" refers to astigmatism generated by the ophthalmic lens, and "unwanted astigmatism" or resulting astigmatism corresponds to the difference between the ophthalmic lens-generated astigmatism and the prescribed astigmatism (wearer astigmatism); in each case, with regards to amplitude or both amplitude and axis.

In the sense of the disclosure, an "optical function" corresponds to a function providing for each gaze direction the effect of an optical lens on the light ray passing through the optical lens.

The optical function may comprise dioptric function, light absorption, polarizing capability, reinforcement of contrast capacity, etc...

The dioptric function corresponds to the optical lens power (mean power, astigmatism etc...) as a function of the gaze direction.

"Ergorama" is a function associating to each gaze direction the usual distance of an object point. Typically, in far vision following the primary gaze direction, the object point is at infinity. In near vision, following a gaze direction essentially corresponding to an angle α of the order of 35° and to an angle β of the order of 5° in absolute value towards the nasal side, the object distance is of the order of 30 to 50 cm. For more details concerning a possible definition of an ergorama, US patent US-A-6, 318,859 may be considered. This document describes an ergorama, its definition and its modeling method.

For the purpose of the disclosure, points may be at infinity or not. Ergorama may be a function of the wearer's ametropia. Using these elements, it is possible to define a wearer optical power and astigmatism, in each gaze direction. An object point M at an object distance given by the ergorama is considered for a gaze direction (α,β). An object proximity ProxO is defined for the point M on the corresponding light ray in the object space as the inverse of the distance MJ between point M and point J of the vertex sphere:

$$\mathrm{ProxO} = 1/\mathrm{MJ}$$

This enables to calculate the object proximity within a thin lens approximation for all points of the vertex sphere, which is used for the determination of the ergorama. For a real lens, the object proximity can be considered as the inverse of the distance between the object point and the front face of the ophthalmic lens, on the corresponding light ray.

For the same gaze direction (α,β), the image of a point M having a given object proximity is formed between two points S and T which correspond respectively to minimal and maximal focal distances (which would be sagittal and tangential focal distances). The quantity ProxI is called image proximity of the point M:

$$ProxI = \frac{1}{2}\left(\frac{1}{JT} + \frac{1}{JS}\right)$$

By analogy with the case of a thin lens, it can therefore be defined, for a given gaze direction and for a given object proximity, i.e. for a point of the object space on the corresponding light ray, an optical power PPO as the sum of the image proximity and the object proximity.

$$\mathrm{PPO} = \mathrm{ProxO} + \mathrm{ProxI}$$

The optical power is also called refractive power.

With the same notations, an astigmatism AST is defined for every gaze direction and for a given object proximity

$$AST = \left| \frac{1}{JT} - \frac{1}{JS} \right|$$

This definition corresponds to the astigmatism of a ray beam created by the ophthalmic lens. The resulting astigmatism ASR is defined for every gaze direction through the ophthalmic lens as the difference between the actual astigmatism value AST for this gaze direction and the prescribed astigmatism. The unwanted astigmatism (resulting astigmatism) ASR more precisely corresponds to module of the vectorial difference between actual (AST, AXE) and prescription data (CYLp, AXISp).

When the characterization of the ophthalmic lens is of optical kind, it refers to the ergorama-eye-lens system described above. For simplicity, the term "lens" is used in the description but it has to be understood as the "ergorama-eye-lens system". The values in optic terms can be expressed for gaze directions. Conditions suitable to determine of the ergorama-eye-lens system are called in the frame present disclosure "given wearing conditions".

In the remainder of the description, terms like « up », « bottom », « horizontal », «vertical », « above », « below », or other words indicating relative position may be used. These terms are to be understood in the wearing conditions of the ophthalmic lens. Notably, the "upper" part of the ophthalmic lens corresponds to a negative lowering angle $\alpha <0°$ and the "lower" part of the ophthalmic lens corresponds to a positive lowering angle $\alpha >0°$.

A "far-vision gaze direction" is defined for an ophthalmic lens, as the vision gaze direction corresponding to the far vision (distant) reference point. Within the present disclosure, far-vision is also referred to as distant-vision. In the sense of the disclosure far vision is to be understood as vision at a distance greater than or equal to 4 meters.

A "near-vision gaze direction" is defined for an ophthalmic lens, as the vision gaze direction corresponding to the near vision (reading) reference point. In the embodiment of a progressive addition lens, the refractive power is substantially equal to the prescribed power in far vision plus the prescribed addition Add. In the sense of the disclosure near vision is to be understood as vision at a distance smaller than or equal to 50 cm. Here "substantially equal" means a "equal with a tolerance of at most 15%". In this manner, a distance up to 57.5 cm is considered as a near vision distance.

An "intermediate-vision gaze direction" is defined for an ophthalmic lens, as the vision gaze direction corresponding to the intermediate vision (a person working in front of its computer desktop). In the sense of the disclosure intermediate vision is to be understood as vision at a distance greater than 50 cm, for example greater than 70 cm, and smaller than 4 meters, for example smaller than 1.5 m.

The "meridian line", referred as ML$(\alpha,\beta)$, of a progressive addition lens is a line defined from top to bottom of the ophthalmic lens and passing through the fitting cross where one can see clearly an object point. Said meridian line is defined on the basis of the repartition of module of resulting astigmatism, ASR, over the $(\alpha, \beta)$ domain and substantially correspond to the center of the two central iso-module of resulting astigmatism values which value is equal to 0.5 D.

Figure 3 shows field vision zones of an ophthalmic progressive addition lens 30 where said lens comprises a far vision (distant vision) zone 32 located in the upper part of the ophthalmic lens, a near vision zone 36 located in the lower part of the ophthalmic lens and an intermediate vision zone 34 situated between the far vision zone 32 and the near vision zone 36. The meridian line is referred as 38.

The "wearing conditions" are to be understood as the position of the ophthalmic lens with relation to the eye of a wearer, for example defined by a pantoscopic angle, a Cornea to lens distance, a Pupil-cornea distance, a CRE to pupil distance, a CRE to lens distance and a wrap angle.

The Cornea to lens distance is the distance along the visual axis of the eye in the primary position (usually taken to be the horizontal) between the cornea and the rear face of the ophthalmic lens; for example equal to 12mm.

The Pupil-cornea distance is the distance along the visual axis of the eye between its pupil and cornea; usually equal to 2mm.

The CRE to pupil distance is the distance along the visual axis of the eye between its center of rotation (CRE) and pupil; for example equal to 11.5mm.

The CRE to lens distance is the distance along the visual axis of the eye in the primary position (usually taken to be the horizontal) between the CRE of the eye and the rear face of the ophthalmic lens, for example equal to 25.5mm.

The pantoscopic angle is the angle in the vertical plane, at the intersection between the rear face of the ophthalmic lens and the visual axis of the eye in the primary position (usually taken to be the horizontal), between the normal to the rear face of the ophthalmic lens and the visual axis of the eye in the primary position ; for example equal to -8°.

The wrap angle is the angle in the horizontal plane, at the intersection between the rear face of the ophthalmic lens and the visual axis of the eye in the primary position (usually taken to be the horizontal), between the normal to the rear face of the ophthalmic lens and the visual axis of the eye in the primary position for example equal to 0°.

An example of standard wearer condition may be defined by a pantoscopic angle of -8°, a Cornea to lens distance of 12 mm, a Pupil-cornea distance of 2 mm, a CRE to pupil distance of 11.5 mm, a CRE to lens distance of 25.5 mm and a wrap angle of 0°.

## DETAILED DESCRIPTION OF THE DISCLOSURE

The disclosure relates to a method for determining an ophthalmic lens 1 adapted to an eye of a wearer, wherein the method comprises the following steps:

- obtaining wearing data step S0, wherein wearing data relative to wearing conditions are obtained,
- obtaining optical targeted optical power step S2, wherein a first and a second target optical powers, perceived by the wearer, respectively for a first and second gazing directions defined in the obtained wearing conditions, are obtained,
  the first and second target optical powers being different one from the other and the first and second gazing directions being different one from the other,
- obtaining data representative of the ophthalmic lens step S4, wherein data representative of the ophthalmic lens 1 is obtained and said data comprises:

    ◦ a material of the ophthalmic lens having a refractive index and a spectral transmission,
    ◦ a front face 1a having a front shape,
    ◦ a rear face 1b having a rear shape,
    ◦ a relative position of the front and rear faces 1a, 1b,
    ◦ a first portion 40 of the ophthalmic lens 1 through which passes the first gazing direction in the obtained wearing conditions, the first portion having a first spectral transmission, and
    ◦ a second portion 42 of the ophthalmic lens 1 through which passes the second gazing direction in the obtained wearing conditions, the second portion having a second spectral transmission,

- obtaining an eye function step S6, wherein a function providing a transmitted optical power variation based on a spectral content of the light entering the eye E of the wearer is obtained,
- determining an optical function step S8, wherein an optical function of the ophthalmic lens 1 based on the data representative of the ophthalmic lens, the first and second spectral transmission, providing to the wearer, in wearing conditions and considering said eye function, such that an estimated first optical power in the first gazing direction equals the first target optical power and an estimated second optical power in the second gazing direction equals the second target optical power, and

wherein at least one of the first spectral transmission, over the first portion 40 of the ophthalmic lens 1, and/or the second spectral transmission, over the second portion 42 of the ophthalmic lens 1, differs from the spectral transmission over another portion of the ophthalmic lens.

An ophthalmic lens 1 adapted to an eye of a wearer is an ophthalmic lens adapted to the prescription of said eye of the wearer.

The wearing conditions can be specific wearing conditions relative to the wearer or standard wearing conditions.

In an embodiment, the first target optical power corresponds to the prescribed far vision power of the wearer.

In an embodiment, the second target optical power corresponds to the prescribed near vision power of the wearer.

The ophthalmic lens 1 is designed to provide to the user the prescribed optical power for near and far vision.

Each wearer has a specific eye E that involves a specific dioptric optical power. This dioptric optical power results from the specific spectral transmission and the curvature of the eye E of the wearer.

Figure 5 illustrates the light transmission of 4 different lenses (lenses A, B, C & D) having different spectral transmission. It has to be noted that the specific spectral transmissions involve an optical power defocus regardless of the shape of the front and the rear faces of the ophthalmic lenses A, B, C & D.

For a presbyopes of an age of 47 years old, the spectral transmission of the ophthalmic lens A involves an optical power shift of -1 D perceived by the wearer. In the same manner, the spectral transmission of the ophthalmic lens B involves an optical power shift of - 0.2 D. The spectral transmission of the ophthalmic lens C involves an optical power shift of - 0.4 D. And the spectral transmission of the ophthalmic lens C involves an optical power shift of -0.25 D.

The optical power shift can be measured directly on the wearer or can be deduced from a mathematical model taking into consideration different parameters such as the age of the wearer and the spectral transmission of the lens. The optical power shift can be derived from a mathematical model, as mentioned in the patent application EP 22305423.

The "eye function" is representing the way the optical power is perceived by the wearer based on the received incident light. The eye function varies with the spectral transmission of the eye of the wearer which induces a variation of the perceived optical power.

The optical power defocus involved by the eye of the wearer can also depend on the cornea, the axial lens and the crystalline lens of the eye of the wearer.

The term "perceived by the wearer" has to be understood as the optical power perceived by the wearer taking into consideration the curvature of the eye E of said wearer and its spectral transmission. It has to be noted that said optical power perceived by the wearer is different from the optical power measured by an ophthalmic lensmeter. Indeed, the ophthalmic lensmeter does not provide an ophthalmic lens taking into consideration the spectral transmission relative to the eye of the wearer, the spectral transmission of the lens, the wearing conditions of the lens, and the ergorama of the wearer.

In an embodiment, the first and second target optical powers are different, for example having at least 0.1 D, preferably at least 0.25 D of difference.

In an embodiment, the first and second gazing directions being different one from the other, for example the first and second gazing directions are spaced by at least 5°, preferably at least 10°.

In an embodiment, the material constituting the ophthalmic lens 1 has a spectral transmission corresponding to the visible spectrum range, ranging from 450 nm up to 650 nm. Preferably, the whole ophthalmic lens 1, between the front and the rear faces 1a, 1b, is made of the same material having a constant refractive index and a constant spectral transmission.

The term "front shape" and "rear shape" have to be understood as sag values of the front and rear faces in their respective reference frames.

From said sag values, local curvatures of the front and the rear faces of the lens can be obtained.

In an embodiment, the first spectral transmission associated to the first portion 40 of the ophthalmic lens 1 comprises a subrange of the visible spectrum range, ranging from 450 nm up to 650 nm.

In an embodiment, the second spectral transmission associated to the second portion 42 of the ophthalmic lens 1 comprises a subrange of the visible spectrum range, ranging from 450 nm up to 650 nm.

In an embodiment, a zone of the ophthalmic lens 1 through which passes the first gazing direction and providing an optical power equal to the first target optical power with a margin of ± 0.25 D, preferably a margin of ± 0.1 D, is defined as the first portion 40.

In an embodiment, a zone of the ophthalmic lens 1 through which passes the second gazing direction and providing an optical power equal to the second target optical power with a margin of ± 0.25 D, preferably a margin of ± 0.1 D, is defined as the second portion 42.

The first and/or the second spectral transmissions being different from the spectral transmission of the material of the ophthalmic lens enables to provide a different optical power defocus than the one of the other portions of the lens.

In an embodiment, the first spectral transmission of the first portion 40 is different from the second spectral transmission of the second portion 42 of the ophthalmic lens.

As shown in reference to figure 5, a similar lens having different spectral transmission provides different optical power defocus to the wearer. Therefore, it is possible that a given prescribed optical power is not exclusively resulting from the curvature of the front face 1a and/or the rear face 1b of the ophthalmic lens.

The estimated first optical power corresponds to the optical power provided to the wearer based on the curvatures of the front 1a and rear faces 1b of the ophthalmic lens 1 in the first gazing direction and the involved optical power defocus relative to the first spectral transmission over the first portion 40 of the ophthalmic lens 1.

In the same manner, the estimated second optical power corresponds to the optical power provided to the wearer based on the curvatures of the front 1a and rear faces 1b of the ophthalmic lens 1 in the second gazing direction and the involved optical power defocus relative to the second spectral transmission over the second portion 42 of the ophthalmic lens 1.

Advantageously, taking into consideration the optical power defocus involved by the first and second spectral transmission, it is then possible to limit the curvature of the front faces in the regions of the first and second portions. By limiting the curvature of said faces, the resulting unwanted astigmatism can be reduced. The resulting astigmatism can be reduced in the first portion 40, the second portion 42 and in a peripheral zone, one each side of the meridian.

Advantageously, the resulting unwanted astigmatism can also be reduced in a zone of the lens dedicated to intermediate vision.

Advantageously by having at least one of the first and second spectral transmission different from the spectral transmission of the material of the ophthalmic lens 1 enables to provide a bi-focal ophthalmic lens without having to proceed to major modification of the curvature of the front 1a and rear faces 1b, if any.

In an embodiment, the first spectral transmission, over the first portion of the ophthalmic lens, and the second spectral transmission, over the second portion of the ophthalmic lens, differ from the spectral transmission over another portion of the ophthalmic lens.

Advantageously having the first and the second spectral transmission different from the spectral transmission of the material of the ophthalmic lens 1 enables to provide a tri-focal ophthalmic lens without having to proceed to modification of the curvature of the front 1a and rear faces 1b.

In an embodiment, the ophthalmic lens 1 comprises a first filter F1 superimposed over the first portion 40 of the ophthalmic lens 1, as shown in figure 6. The first spectral transmission is the resulting spectral transmission of the first portion 40, comprising the first filter F1, and of the ophthalmic lens itself.

In an embodiment, the ophthalmic lens 1 comprises a second filter F2 superimposed over the second portion 42 of the ophthalmic lens 1, as shown in figure 6. The second spectral transmission is the resulting spectral transmission of the second portion 42, comprising the second filter F2, and of the ophthalmic lens itself.

The first and the second filters F1, F2 can be both located on the front face of the lens as shown in figure 7a or both on the rear face of the lens as shown in figure 7b.

However, the first and the second filters F1, F2 can be on different faces of the ophthalmic lens 1. For example, the first filter F1 may be located on the front face and the second filter F2 may be located on the rear face, or vice versa.

In an embodiment, the first and the second filter F1, F2 can be encompassed between a first layer 10 and a second layer 12 forming together the ophthalmic lens 1, as shown in figure 7c.

In an embodiment, the first and the second filters F1, F2 can be chromatic filters. The chromatic filter can be in the form of a layer formed, for example a coating fixed on one of the front 1a or rear face 1b of the ophthalmic lens 1. In an alternative embodiment, the ophthalmic lens can be dipped in a colorant, in a manner that the colorant dyes the ophthalmic lens occupying the spaces between the crystals of the material forming the ophthalmic lens.

Each chromatic filter has a specific spectral transmission, as illustrated in figure 5.

In an embodiment, the first and second spectral transmission provide respectively a first and a second addition of perceived optical power to the eye of the wearer, the absolute value of the difference between the first addition and the second addition is strictly greater than zero, for example greater than 0.1 D, preferably greater than 0.25 D.

Using a chromatic filter being blue results in a specific spectral transmission relative to the blue color. The spectral transmission relative to the blue color involves a specific optical power defocus. A specific focal plan position is involved when using a blue filter.

The same reasoning applies for a filter of the color green and the color red.

The application EP 22305423 specifies how to determine and compensate a optical power defocus when considering spectral transmission.

Based on the known value of the optical power defocus willing to be provided via the spectral transmission and the position of the focal plan for any given color, it is possible to determine the color to provide over a given portion of the ophthalmic lens 1.

In an embodiment, the ophthalmic lens 1 according to the disclosure comprises a continuous variation of the optical power defocus provided by a continuous variation of the spectral transmission between the first and second portions 40, 42, comprising the first and second filter F1, F2, over an intermediate portion 44 of the ophthalmic lens 1. The continuous variation of the spectral transmission over the intermediate portion along the meridian is configured to provide a continuous variation of the optical power perceived by the wearer when gazing along the meridian. The continuous gradient of spectral transmission results in a constant offset of the spectral transmission curve, representative of the spectral transmission.

In an embodiment, the offset can be a constant increase of the spectral transmission simultaneously of each of the wavelength. In said manner, the spectral transmission, for each wavelength, relative to the first filter F1, extending over the first portion 40, varies in a linear manner to reach the spectral transmission, for each wavelength, relative to the second filter F2 extending over the second portion 42 (when moving over the ophthalmic lens from the first portion 40 to the second portion of the lens 42).

In said embodiment, when moving over the ophthalmic lens 1 from the first portion 40 to the second portion of the lens 42, the offset of the spectral transmission curve relative to the spectral transmission of the filer F1 consists in a vertical upshift of the spectral transmission curve. This corresponds to a vertical upward translation of the spectral transmission curve, when considering a spectral transmission curve as displayed in figure 5.

In an embodiment, the offset can be a constant decrease of the spectral transmission simultaneously of each of the wavelength. In said manner, the spectral transmission, for each wavelength, relative to the first filter F1, extending over the first portion 40, varies in a linear manner to reach the spectral transmission, for each wavelength, relative to the second filter F2 extending over the second portion 42 (when moving over the ophthalmic lens from the first portion 40 to the second portion of the lens 42).

In said embodiment, when moving over the ophthalmic lens 1 from the first portion 40 to the second portion of the lens 42, the offset of the spectral transmission curve relative to the spectral transmission of the filer F1 consists in a vertical downshift of the spectral transmission curve. This corresponds to a vertical downward translation of the spectral transmission curve, when considering a spectral transmission curve as displayed in figure 5.

In another embodiment, the constant offset relates can result to a horizontal shift of the spectral transmission curve.

In such manner, a first filter F1 has a first distribution of the spectral transmission between a first wavelength $\lambda_{1,1}$ and $\lambda_{1,2}$. A second filter F2 has a second distribution of the spectral transmission between a first wavelength $\lambda_{2,1}$ and $\lambda_{2,2}$. The spectral transmission curves of the first and the second spectral distributions has an identical shape.

$\lambda_{2,1}$ corresponds to $\lambda_{1,1} + \delta$ and $\lambda_{2,2}$ corresponds to $\lambda_{1,1} + \delta$, with $\delta$ being a given delta of wavelength which can be positive or negative.

Among the gradient, the spectral transmission distribution shifts horizontally in a constant manner, for each wavelength comprised between $\lambda_{1,1}$ and $\lambda_{1,2}$, until the spectral distribution extends between the wavelengths $\lambda_{2,1}$ and $\lambda_{2,2}$. This corresponds to a horizontal translation of the spectral transmission curve (when considering a spectral transmission curve as displayed in figure 5).

The ophthalmic lens 1 according to the disclosure can be a progressive addition lens. The intermediate portion can be the corridor portion of a progressive addition lens, and the gradient of spectral transmissions may extend over said corridor portion of the progressive addition lens.

The corridor portion extends alongside the meridian between the first portion 40 dedicated for far vision, in wearing condition, and the second portion 42 dedicated for near vision, in wearing conditions, for example in standard wearing conditions.

Using the relationship between spectral transmission and induced optical power defocus, it is advantageous possible to design a progressive addition lens having front and rear faces having low variation of curvature and therefore low unwanted astigmatism.

The determination method can be further optimized by comprising the following additional steps:

- wearer prescribed astigmatism obtention step, wherein the wearer's prescribed astigmatism is obtained,
- ophthalmic lens astigmatism determination step, wherein the astigmatism provided by the ophthalmic lens 1 is determined,
- optimizing step, wherein the ophthalmic lens so as to reduce the difference between the measured astigmatism and the prescribed astigmatism based on the optimization of any of the following criterions:

  ◦ front shape of the front face,
  ◦ rear shape of the rear face,
  ◦ position of the front face with respect to the rear face,
  ◦ refractive index of the material of the ophthalmic lens,
  ◦ spectral transmission relative to the material of the ophthalmic lens,
  ◦ the first portion of the ophthalmic lens having the first spectral transmission, and
  ◦ the second portion of the ophthalmic lens having the second spectral transmission.

The optimization may involve a redefinition of the contour of the first and/or second portion 40, 42.

The optimization may involve a change in the position of the contour of the first and/or second portion 40, 42.

The optimization may involve a variation of the spectral transmission provided by the first and/or second portion 40, 42.

Knowing the wearer's prescribed astigmatism enables to provide the wearer with an ophthalmic lens not providing the additional unwanted astigmatism and therefore reduce optical aberration and improve vision quality.

The astigmatism of the ophthalmic lens 1 is determined, for example measured. The astigmatism of the ophthalmic lens 1 is then compared to the wearer's prescribed astigmatism. If the difference between the astigmatism of the ophthalmic lens 1 and the wearer's prescribed astigmatism is positive, the data representative of the ophthalmic lens is optimized so as to reduce said difference.

Preferentially, the optimization is based on the first portion having a first spectral transmission and the second portion having a second spectral transmission. Favouriting these two parameters enables to lower the geometric aspect, namely the shape of the front and rear faces of the ophthalmic lens 1 to provide the prescribe optical power to the wearer. Reducing the curvature of the front and/or rear face results in lowering the induced astigmatism relative to said curvature.

In an embodiment, a selection of the ophthalmic lens 1 is made among a predefined set of ophthalmic lenses providing optical parameters being the closest to optical parameters of a target, for example the target is an optical power map and/or an astigmatism map. For example, the ophthalmic lens 1 can be selected based on the wearer's astigmatism.

In an embodiment, the first and/or second filter are electrochromic filters being activated based on a driving signal for example the application of a voltage.

In an embodiment, the electrochromic filter provides a spectral transmission conditioned based on the application of a given amount voltage to the ophthalmic lens. Preferably, by modifying the voltage the spectral transmission provided by the electrochromic is also modified

In an embodiment, the ophthalmic lens according to the disclosure is a bi-focal lens, a tri-focal lens, an antifatigue lens or a progressive addition lens.

In an embodiment, the ophthalmic lens 1 according to the disclosure is configured to be mounted into a spectacle frame. For example, the ophthalmic lens is plano-convex or plano-concave.

In an embodiment, the ophthalmic lens has a spherotoric front and rear diopters.

In an embodiment, the ophthalmic lens 1 according to the disclosure, is a contact lens.

In an embodiment, the first portion 40 is defined by each of a plurality of zones of the ophthalmic lens 1 providing an optical power equal to the first target optical power with a margin of $\pm$ 0.25 D, preferably a margin of $\pm$ 0.1 D. One among the plurality of zones comprises a subzone of the ophthalmic lens 1 through which passes the first gazing direction. Said plurality of zones can be a first plurality of lenslets. The first plurality of lenslets can have a first spectral transmission.

In an embodiment, the second portion 42 is defined by each of a plurality of zones of the ophthalmic lens 1 providing an optical power equal to the second target optical power with a margin of $\pm$ 0.25 D, preferably a margin of $\pm$ 0.1 D. One among the plurality of zones comprises a subzone of the ophthalmic lens 1 through which passes the second gazing direction. Said plurality of zones can be a second plurality of lenslets. The second plurality of lenslets can have a second spectral transmission.

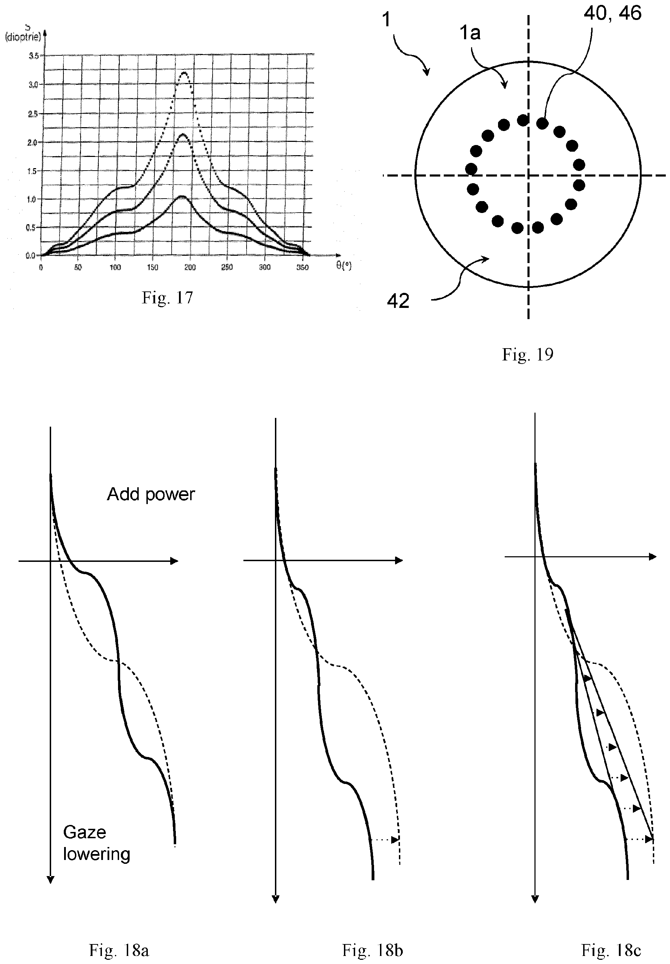

For example, as illustrated in figure 19, the ophthalmic lens 1 having an overall spherical shape and comprising lenslets 46 over the front face 1a. The lenslets 46 are disposed in an annular manner on the front face of the ophthalmic lens 1. The lenslets 46 may have a specific chromatic tint.

The lenslets 46 may define the first portion 40, such that the lenslets 46 forms the plurality of zones of the ophthalmic lens 1 providing an optical power equal to the first target optical power with a margin of $\pm$ 0.25 D, preferably a margin of $\pm$ 0.1 D. Additionally, the first gazing direction passes through one of the lenslets 46.

The reminder part of the front face of the ophthalmic lens 1, free of the lenslets 46, defines the second portion 42. The reminder part of the front face of the ophthalmic lens 1 provides an optical power equal to the second target optical power with a margin of $\pm$ 0.25 D, preferably a margin of $\pm$ 0.1 D. Additionally, the reminder part of the front face of the ophthalmic lens 1 comprises a subzone of the ophthalmic lens 1 through which passes the second gazing direction.

Exemplary embodiments of different applications of ophthalmic lenses according to the disclosure are discussed hereafter.

**Example 1: Reduce unwanted aberrations**

Ophthalmic lenses, according to the disclosure, provide means to reduce the unwanted aberrations, such as unwanted astigmatism, in particular for antifatigue lenses or progressive addition lenses.

When considering a progressive addition lens having a 2.25 D addition, it is possible to provide an addition of 2.00 D based on the geometry of the lens:

- the front face shape having a specific curvature; and/or
- the rear face shape having a specific curvature; and/or
- a relative position of the front and rear faces.

The supplemental addition of 0.25 D may be provided by the gradient of spectral transmissions between the first and the second portions of the ophthalmic lens.

Figures 8a and 8b represent the optical power and the astigmatism cartographies of a progressive addition lens having an addition of 2.00 D according to the prior art. This progressive addition lens having an addition of 2.00 D provides an optical power of 1.99 D to the wearer in near vision and induces a maximum resulting astigmatism of 1.97 D.

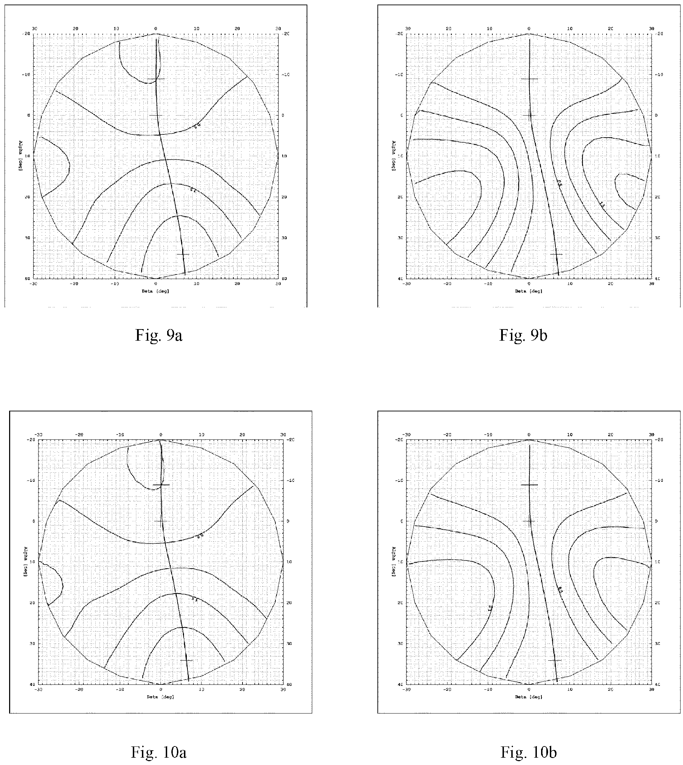

Figures 9a and 9b represent the optical power and the astigmatism cartographies of a progressive addition lens having an addition of 2.25 D according to the prior art. This progressive addition lens having an addition of 2.25 D provides an optical power of 2.25 D to the wearer in near vision and induces a maximum resulting astigmatism of 2.25 D. The maximum resulting astigmatism exceeds the one of a progressive addition lens having a 2.00 D addition.

It is noticeable that the geometry of the ophthalmic lens providing a higher addition results in providing a higher maximum resulting astigmatism.

Figures 10a and 10b represent the optical power and the astigmatism cartographies of a progressive addition lens according to the disclosure having an addition of 2.00 D provided by the geometry of the lens and a supplemental addition of 0.25 D provided by the gradient of spectral transmissions between the first and the second portions of the ophthalmic lens. The gradient extends between the gazing direction wherein $\alpha$ varies between 0 and 34°. Over this variation of 34° relative to the inclination of the gazing direction, the power shift evolves in a continuous manner from 0.00 D to 0.25 D.

The progressive addition lens according to the disclosure provides an optical power of 2.25 D to the wearer in near vision and induces a maximum resulting astigmatism of 1.97 D, and the maximum resulting astigmatism does not exceed the one of a progressive addition lens having a 2.00 D addition, as shown in figure 9b for the progressive addition lens according to the state in art having a 2.25 D addition. The maximum resulting astigmatism of the ophthalmic lens according to the disclosure is identical to the one shown in figure 8b, relative to a progressive addition lens having an addition of 2.00D.

Consequently, the use of a gradient of spectral transmissions between the first and the second portions of the ophthalmic lens to provide optical power shift enables to reduce the maximum resulting astigmatism provided to the wearer.

**Example 2: Anisometropia management**

It is current for people to have different visual defects for their left and right eyes.

In order to overcome anisometropia, it is known to provide a different lens geometry (curvature of the front and rear faces and the width between said front and rear faces) for the lenses facing the left and the right eyes of the wearer. This may result in binocular disparities in terms of optical power and resulting astigmatism provided to the right and the left eyes of the wearer. These disparities reduce the vision quality of the wearer.

In the present example, it is considered a person having a prescribed optical power of 1.00 D and an addition of 2.00 D of the right eye and a prescribed optical power of -1.00 D and an addition of 2.00 D of the left eye. In the present embodiment the anisometropia is of 2.00D.

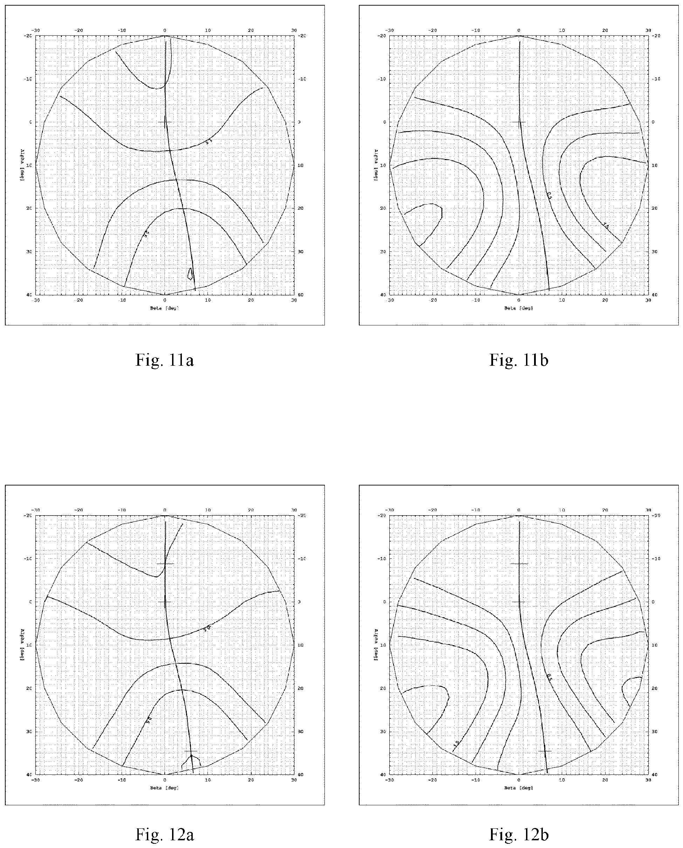

Figures 11a and 11b represent the optical power and the astigmatism cartographies of a progressive addition lens according to the prior art facing the right eye.

Figures 12a and 12b represent the optical power and the astigmatism cartographies of a progressive addition lens according to the prior art facing the left eye (but represented with the x-axis reversed for easier comparison with the right eye).

The cartographies relative to the lenses according to the prior art facing the left and the right eyes of the wearer present optical power and astigmatism disparities resulting in alteration of the vision quality of the wearer.

Considering now two plano progressive addition lens having a geometry to provide a 2.00 D addition and a variation of the spectral transmission induced by the first and second spectral transmissions over the first portion and the second portion of the ophthalmic lens.

In this example, the first spectral transmission is identical to the second spectral transmission. And the ophthalmic lens according to the disclosure is free of a zone having a spectral transmission equal to the first and/or second spectral transmission. This can be for example achieved by providing a constant chromatic tint on the ophthalmic lens configured to face the left eye of the wearer and a constant chromatic tint on the ophthalmic lens configured to face the right eye of the wearer.

The constant chromatic tint of the ophthalmic lens configured to face the right eye of the wearer is chosen so as to provide an optical power shift of 1.00 D. The ophthalmic lens configured to face the left eye of the wearer is chosen so as to provide an optical power shift of -1.00 D.

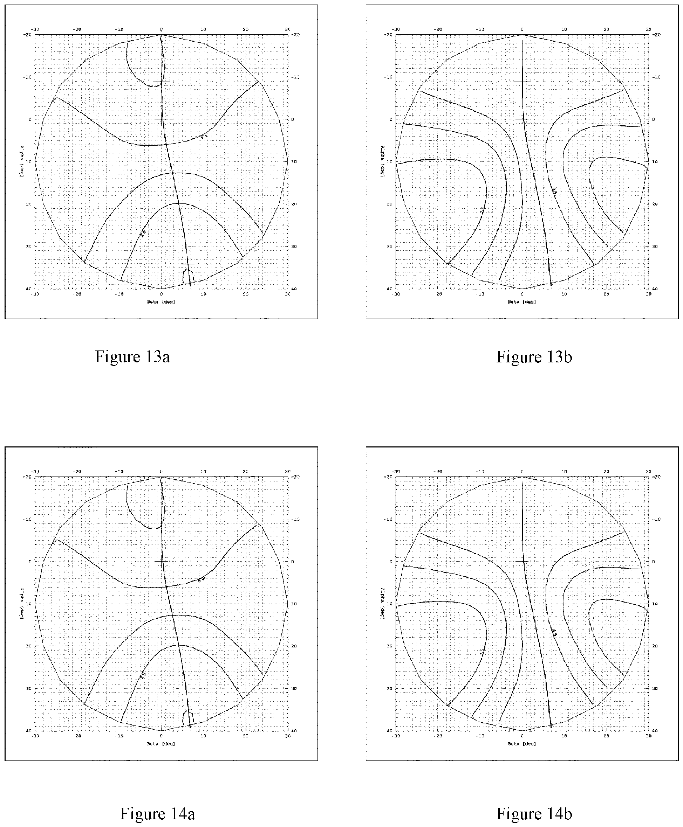

Figure 13a and 13b represent the optical power and the astigmatism cartographies of a progressive addition lens facing the right eye according to the disclosure, wherein the prescribed optical power of 1.00D is provided by a constant tint.

Figure 14a and 14b represent the optical power and the astigmatism cartographies of a progressive addition lens facing the left eye according to the disclosure (but represented with the x-axis reversed for easier comparison with the right eye), wherein the prescribed optical power of -1.00D is provided by a constant tint.

It is noticeable that the disparities between the optical power cartographies between figures 13a and 14 is less important than the disparities between the optical power cartographies shown in figures 11a and 12a relative to progressive addition lens relative to the prior art. The same reasoning applies for the astigmatism cartographies 13b, 14b relative to the progressive addition lens according to the disclosure and the cartographies 11b, 12b relative to the progressive addition lens according to the prior art.

By providing a different chromatic tint one the progressive addition lens configured to face the left and the right eyes of the wearer, its vision quality is improved.

**Example 3: Choice of a specific chromatic tint for a specific offset of optical power.**

Ophthalmic lenses with higher absolute far vision sphere values tend to have larger aberrations than ophthalmic lenses having low values of sphere values.

For example, a progressive addition lens providing an optical power of 1.00 D and an addition of 2.00 D or an optical power of -1.00 D and an addition of 2.00 D involves more optical power errors and resulting astigmatism than a plano progressive addition lens providing no optical power except the addition of 2.00 D.

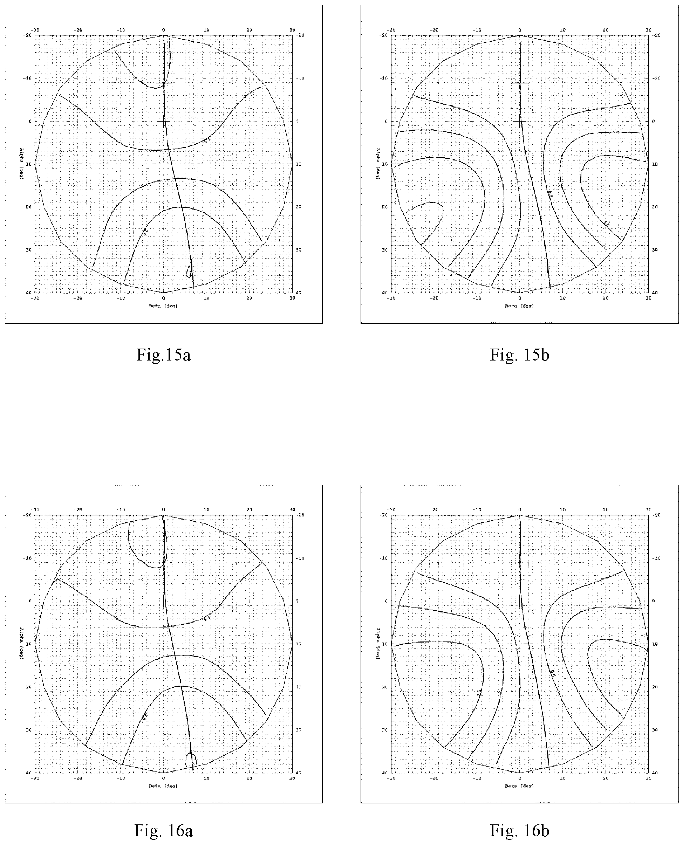

Figures 15a and 15b represent the optical power and the astigmatism cartographies of a progressive addition lens having an optical power of 1.00 D and an addition of 2.00 D according to the prior art. This progressive addition lens provides a far vision optical power of 1.00 D, a near vision optical power of 3.00 D and induces a maximum resulting astigmatism of 2.05 D in a temporal zone.

These errors can be reduced by considering a progressive ophthalmic lens according to the disclosure. A conventional lens can be replaced by a progressive addition lens having a geometry closer to plano-lens, and choosing a specific first and second spectral transmissions over the first and second portions of the ophthalmic lens.

In this example, the first spectral transmission can be identical to the second spectral transmission. And the ophthalmic lens according to the disclosure is free of a zone having a spectral transmission equal to the first and/or second spectral transmission. This can be for example achieved by providing a constant chromatic tint on the progressive addition lens

Figures 16a and 16b represent the optical power and the astigmatism cartographies of a progressive addition lens according to the disclosure having an optical power of 1.00 D provided by a chromatic tint and an addition of 2.00 D. It is noted that the resulting astigmatism does not exceed 2.00 D.

**Example 4: Reducing the rebound effect.**

Some progressive addition lens designs have unwanted local sphere maxima or "rebounds" in their periphery. These rebounds correspond to local maxima of optical power. These rebounds can generate distortions. They can also disturb the natural accommodation in the periphery of the lens. It is desirable to minimize these rebounds in a progressive addition lens. However, it can be difficult to do so without also modifying other properties of the progressive addition lens, such as the distribution of resulting astigmatism.

A solution to minimize optical power rebounds without modifying the distribution of resulting astigmatism would be to use on first and/or second portions 40, 42, comprising the rebound effect, a specific spectral transmission inducing a negative power shift. This local first and/or second portions 40, 42 can modify the transmitted optical power without changing the transmitted astigmatism.

As shown, in figure 17, the use of a specific spectral transmission over the first and/or second portions 40, 42 defining the location comprising the rebound can be used to reduce the effect relative to rebound effects. More generally, local applications of specific spectral transmission can be used to adjust (increase or decrease) the transmitted power of the lens to improve its performance for the wearer.

**Example 5: Intermediate vision booster for a progressive addition lens**

On a progressive addition lens, the intermediate vision zone 34 is generally the narrowest in terms of field of view. Said intermediate vision zone 34 is rendered narrow due to the face that the variation of power in said zone induces aberrations next to the corridor dedicated to the progression of the optical power.

Figure 18a discloses the evolution of the provided optical power based on the gaze direction of a wearer for a normal progressive addition lens (dashed line) and a progressive addition lens comprising an intermediate vision zone with a stabilized optical power (bold line).

It is known to use progressive addition lenses with an enlarged intermediate vision zone 34 with a stabilized optical power, as shown in figure 18a, in bold line.

The drawback of said progressive addition lenses comprising a stabilize optical power in the near vision zone is that in order to reach the desired addition value, the progression of the optical power must also be increased above and/or below the intermediate vision zone. This reduces the fields of view above and below the intermediate vision zone, namely the far vision zone 32 and the near vision zone 36.

It is to be noted that the optical power slope of progressive an addition lenses with an enlarged intermediate vision zone 34 with a stabilized optical power is greater than the conventional profile above and below the intermediate vision zone 34.

According to the disclosure, starting from a conventional progression profile (dashed line) one can design a progression profile with stabilized intermediate vision (bold line) and such that the power slope does not exceed that of the initial profile, as illustrated in figure 18b. As a consequence, the addition of optical power of the bold profile is less than the prescribed addition of the optical power represented by the dashed lines.

The missing addition can be compensated by a gradient of spectral transmission between a first portion located on the upper part of the intermediate vision zone having a stabilized optical power and the second potion defined by the near vision zone 36, as illustrated by the arrows in the figure 18c. The supplemental optical power induced by the gradient of spectral transmission enables an optical power offset so as to reach the prescribed addition in the near vision distance zone 36.

The gradient of spectral transmission enables to improve the vision of the wearer in the intermediated vision zone, providing an enlarged intermediate vision zone without impacting the far vision zone 32 and the near vision 36.

The disclosure has been described above with the aid of embodiments without limitation of the general inventive concept.

Many further modifications and variations will suggest themselves to those skilled in the art upon making reference to the foregoing illustrative embodiments, which are given by way of example only and which are not intended to limit the scope of the disclosure, that being determined solely by the appended claims.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used. Any reference signs in the claims should not be construed as limiting the scope of the disclosure.

**Claims**

1. Method for determining an ophthalmic lens adapted to an eye of a wearer, wherein the method comprises the following steps:

    - obtaining wearing data relative to wearing conditions,
    - obtaining a first and a second target optical powers, perceived by the wearer, respectively for a first and second gazing directions defined in the obtained wearing conditions,
    the first and second target optical powers being different one from the other and the first and second gazing directions being different one from the other,
    - obtaining data representative of the ophthalmic lens comprising:

        ○ a material of the ophthalmic lens having a refractive index and a spectral transmission,
        ○ a front face having a front shape,
        ○ a rear face having a rear shape,
        ○ a relative position of the front and rear faces,
        ○ a first portion of the ophthalmic lens through which passes the first gazing direction in the obtained wearing conditions, the first portion having a first spectral transmission, and
        ○ a second portion of the ophthalmic lens through which passes the second gazing direction in the obtained wearing conditions, the second portion having a second spectral transmission,

    - obtaining an eye function providing a transmitted optical power variation based on a spectral content of the light entering the eye of the wearer,

- determining an optical function of the ophthalmic lens based on the data representative of the ophthalmic lens, the first and second spectral transmission, providing to the wearer, in wearing conditions and considering said eye function, such that an estimated first optical power in the first gazing direction equals the first target optical power and an estimated second optical power in the second gazing direction equals the second target optical power, and

wherein at least one of the first spectral transmission, over the first portion of the ophthalmic lens, and/or the second spectral transmission, over the second portion of the ophthalmic lens, differs from the spectral transmission over another portion of the ophthalmic lens.

2. Method for determining the ophthalmic lens according to claim 1, wherein the first spectral transmission, over the first portion of the ophthalmic lens, and the second spectral transmission, over the second portion of the ophthalmic lens, differs from the spectral transmission over another portion of the ophthalmic lens.

3. Method for determining the ophthalmic lens according to claim 1 or 2, wherein:

- providing a first filter superimposed over the first portion of the ophthalmic lens, the first spectral transmission is the resulting spectral transmission of the light passing through the first portion of the ophthalmic lens, and
- providing a second filter superimposed over the second portion of the ophthalmic lens, the second spectral transmission is the resulting spectral transmission of the light passing through the second portion of the ophthalmic lens.

4. Method for determining the ophthalmic lens according to any of the preceding claims, wherein the first and second spectral transmission provide respectively a first and a second addition of perceived optical power to the eye of the wearer, the absolute value of the difference between the first addition and the second addition is strictly greater than zero, for example greater than 0.1 D, preferably greater than 0.25 D.

5. Method for determining the ophthalmic lens according to any of the preceding claims, wherein the ophthalmic lens comprises between the first portion and the second portion, a continuous gradient of spectral transmissions configured to provide a continuous variation of the optical power perceived by the wearer.

er.

6. Method for determining the ophthalmic lens according to claim 6, wherein the ophthalmic lens is a progressive addition lens, and the gradient of spectral transmissions extends over a corridor portion of the progressive addition lens,

the corridor portion extends alongside the meridian between the first portion dedicated for far vision, in wearing condition, and the second portion dedicated for near vision, in wearing conditions, and
the corridor portion extends over a progression portion of the progressive addition lens.

7. Method for determining the ophthalmic lens according to any of the preceding claims, wherein the method further comprises:

- obtaining the wearer's prescribed astigmatism,
- determining the astigmatism provided by the ophthalmic lens,
- optimizing the ophthalmic lens so as to reduce the difference between the measured astigmatism and the prescribed astigmatism based on the optimization of any of the following criterions:

∘ front shape of the front face,
∘ rear shape of the rear face,
∘ position of the front face with respect to the rear face,
∘ refractive index of the material of the ophthalmic lens,
∘ spectral transmission relative to the material of the ophthalmic lens,
∘ the first portion of the ophthalmic lens having the first spectral transmission, and
∘ the second portion of the ophthalmic lens having the second spectral transmission.

8. Method for determining the ophthalmic lens according to any of the preceding claims, wherein a selection of the ophthalmic lens is made among a predefined set of ophthalmic lenses providing optical parameters being the closest to optical parameters of a target, for example the target is an optical power map and/or an astigmatism map.

9. Method for determining the ophthalmic lens according to any of the preceding claims, wherein the first and/or second filter is activated based on a driving signal for example the application of a voltage.

10. An ophthalmic lens adapted to an eye of a wearer, the ophthalmic lens provides a first optical power in a first direction and a second optical power in a second gazing direction, the first and second gazing directions being different, and

the first and second optical powers being different,
the ophthalmic lens has:

- a front face, configured to face an object in the real scene when the ophthalmic lens is worn, having a front shape,
- a rear face, configured to face the eye of a wearer when the ophthalmic lens is worn, the rear face having a rear shape,
- a relative position of the front and rear faces,
- spectral transmission relative to the material of the ophthalmic lens, and
- a refractive index of the material of the ophthalmic lens,
- a first portion of the ophthalmic lens through which gaze the wearer, when the wearer wears the ophthalmic lens in wearing conditions and gazes through the first gazing direction, the first portion has a first spectral transmission, and
- a second portion of the ophthalmic lens through which gaze the wearer, when the wearer wears the ophthalmic lens in the wearing conditions and gazes through the second gazing direction, the second portion has a second spectral transmission,

wherein at least one of the first spectral transmission, over the first portion of the ophthalmic lens, and/or the second spectral transmission, over the second portion of the ophthalmic lens, differs from the spectral transmission over another portion of the ophthalmic lens.

11. The ophthalmic lens according to claim 10, wherein the ophthalmic lens comprises:

- a first filter superimposed over the first portion of the ophthalmic lens, the first spectral transmission is the resulting spectral transmission of the light passing through the first portion of the ophthalmic lens, and
- a second filter superimposed over the second portion of the ophthalmic lens, the second spectral transmission is the resulting spectral transmission of the light passing through the second portion of the ophthalmic lens.

12. The ophthalmic lens according to any of claims 10 or 11, wherein the first and second spectral transmissions are configured to provide respectively a first and a second additions of perceived optical power to the eye of the wearer, and the absolute value of the difference between the first addition and the second addition is strictly greater than zero, for example greater than 0.1 D, preferably greater than 0.25 D.

13. The ophthalmic lens according to any of claims 10 to 12, the ophthalmic lens is a progressive ophthalmic lens and comprises between the first portion and the second portion, a continuous gradient of spectral transmissions.

14. The ophthalmic lens according to claim 13, wherein the gradient of spectral transmissions extends over a corridor portion of the progressive ophthalmic lens, the corridor portion extends between the first portion dedicated for far vision, in wearing condition, and the second portion dedicated for near vision, in wearing conditions, and the corridor portion extends over a progression portion of the progressive ophthalmic lens.

15. The ophthalmic lens according to any of claims 10 to 14, wherein the ophthalmic lens is configured to be mounted in a spectacle frame.

Fig. 1

Fig. 3

Fig. 2

Fig. 4

Fig. 5

17

Fig. 6

Fig. 7a

Fig. 7b

Fig. 7c

Fig. 8a

Fig. 8b

Fig. 9a

Fig. 9b

Fig. 10a

Fig. 10b

Fig. 11a

Fig. 11b

Fig. 12a

Fig. 12b

Figure 13a

Figure 13b

Figure 14a

Figure 14b

Fig.15a

Fig. 15b

Fig. 16a

Fig. 16b

Fig. 17

Fig. 19

Add power

Gaze
lowering

Fig. 18a

Fig. 18b

Fig. 18c

EP 4 386 470 A1

**EUROPEAN SEARCH REPORT**

Application Number

EP 22 30 6856

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/315448 A1 (DUBAIL MARIE [FR] ET AL) 8 October 2020 (2020-10-08) * paragraphs [0020] - [0037], [0053], [0134], [0160] - [0163] * ----- | 1-15 | INV. G02C7/02 G02C7/06 G02C7/10 |
| X | US 2014/300857 A1 (COHEN-TANNOUDJI DENIS [FR] ET AL) 9 October 2014 (2014-10-09) * paragraph [0172]; figure 8 * ----- | 10-15 | |
| X | US 2002/005932 A1 (KERNS DAVID V [US] ET AL) 17 January 2002 (2002-01-17) * paragraphs [0008] - [0009]; figures 2, 3, 8, 9 * ----- | 10-15 | |
| X | US 2022/342233 A1 (GAWNE TIMOTHY JERNER [US] ET AL) 27 October 2022 (2022-10-27) * paragraphs [0014] - [0127] * ----- | 10-15 | |
| X | US 2019/278108 A1 (ANG KER CHIN [SG] ET AL) 12 September 2019 (2019-09-12) * paragraphs [0093] - [0114] * ----- | 10-15 | TECHNICAL FIELDS SEARCHED (IPC) |
| A | YANG JINGLEI ET AL: "A role of color vision in emmetropization in C57BL/6J mice", SCIENTIFIC REPORTS, vol. 10, no. 1, 10 September 2020 (2020-09-10), pages 1-12, XP093045110, DOI: 10.1038/s41598-020-71806-0 Retrieved from the Internet: URL:https://www.nature.com/articles/s41598-020-71806-0.pdf> [retrieved on 2023-05-09] * the whole document * ----- | 1-15 | G02C A61B |

-/--

The present search report has been drawn up for all claims

| Place of search | Date of completion of the search | Examiner |
|---|---|---|
| Munich | 10 May 2023 | Albero Silvestre, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

24

Europäisches
Patentamt

European
Patent Office

Office européen
des brevets

## EUROPEAN SEARCH REPORT

Application Number

**EP 22 30 6856**

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | GAWNE TIMOTHY J ET AL: "An opponent dual-detector spectral drive model of emmetropization", VISION RESEARCH, ELSEVIER, AMSTERDAM, NL, vol. 173, 19 May 2020 (2020-05-19), pages 7-20, XP086196608, ISSN: 0042-6989, DOI: 10.1016/J.VISRES.2020.03.011 [retrieved on 2020-05-19] * the whole document * | 1-15 | |

TECHNICAL FIELDS
SEARCHED (IPC)

The present search report has been drawn up for all claims

| Place of search | Date of completion of the search | Examiner |
|---|---|---|
| Munich | 10 May 2023 | Albero Silvestre, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 30 6856

This annex lists the patent family members relating to the patent documents cited in the above-mentioned European search report.
The members are as contained in the European Patent Office EDP file on
The European Patent Office is in no way liable for these particulars which are merely given for the purpose of information.

10-05-2023

| Patent document cited in search report | | Publication date | Patent family member(s) | | Publication date |
|---|---|---|---|---|---|
| US 2020315448 | A1 | 08-10-2020 | BR 112020012474 | A2 | 24-11-2020 |
| | | | CN 111556725 | A | 18-08-2020 |
| | | | EP 3501376 | A1 | 26-06-2019 |
| | | | JP 2021506518 | A | 22-02-2021 |
| | | | KR 20200103687 | A | 02-09-2020 |
| | | | US 2020315448 | A1 | 08-10-2020 |
| | | | WO 2019120992 | A1 | 27-06-2019 |
| US 2014300857 | A1 | 09-10-2014 | AU 2012348560 | A1 | 17-07-2014 |
| | | | AU 2016204243 | A1 | 14-07-2016 |
| | | | AU 2018203487 | A1 | 07-06-2018 |
| | | | AU 2020203703 | A1 | 25-06-2020 |
| | | | BR 112014013881 | A2 | 13-06-2017 |
| | | | CN 103998974 | A | 20-08-2014 |
| | | | CN 106842617 | A | 13-06-2017 |
| | | | EP 2602654 | A1 | 12-06-2013 |
| | | | JP 2015507217 | A | 05-03-2015 |
| | | | JP 2019061232 | A | 18-04-2019 |
| | | | JP 2020204785 | A | 24-12-2020 |
| | | | KR 20140104998 | A | 29-08-2014 |
| | | | US 2014300857 | A1 | 09-10-2014 |
| | | | WO 2013084177 | A1 | 13-06-2013 |
| US 2002005932 | A1 | 17-01-2002 | AU 784671 | B2 | 25-05-2006 |
| | | | EP 1240542 | A1 | 18-09-2002 |
| | | | US 6250759 | B1 | 26-06-2001 |
| | | | US 2002005932 | A1 | 17-01-2002 |
| | | | WO 0146747 | A1 | 28-06-2001 |
| US 2022342233 | A1 | 27-10-2022 | CN 114503015 | A | 13-05-2022 |
| | | | EP 4031934 | A1 | 27-07-2022 |
| | | | US 2022342233 | A1 | 27-10-2022 |
| | | | WO 2021055162 | A1 | 25-03-2021 |
| US 2019278108 | A1 | 12-09-2019 | CN 109923466 | A | 21-06-2019 |
| | | | EP 3535619 | A1 | 11-09-2019 |
| | | | US 2019278108 | A1 | 12-09-2019 |
| | | | WO 2018083038 | A1 | 11-05-2018 |

EPO FORM P0459

For more details about this annex : see Official Journal of the European Patent Office, No. 12/82

**REFERENCES CITED IN THE DESCRIPTION**

**Patent documents cited in the description**

- US 6318859 A

- EP 22305423 A